Europäisches Patentamt

(19) European Patent Office

Office européen des brevets

(11) EP 0 560 740 B1

(12) **EUROPEAN PATENT SPECIFICATION**

(45) Date of publication and mention
of the grant of the patent:
**30.07.1997 Bulletin 1997/31**

(51) Int. Cl.$^6$: **C01B 13/10**, C25B 1/00

(21) Application number: **93830089.4**

(22) Date of filing: **05.03.1993**

(54) **Apparatus and process for electrolytic ozone generation**

Apparat und Verfahren zur elektrolytischen Herstellung von Ozon

Appareil et procédé pour la génération électrolytique d'ozone

(84) Designated Contracting States:
**DE FR IT SE**

(30) Priority: **09.03.1992 JP 86441/92**

(43) Date of publication of application:
**15.09.1993 Bulletin 1993/37**

(73) Proprietor: **PERMELEC ELECTRODE LTD.**
**Fujisawa-shi, Kanagawa (JP)**

(72) Inventors:
• **Nakamatsu, Shuji**
**Fujisawa-shi, Kanagawa (JP)**
• **Nishiki, Yoshinori**
**Fujisawa-shi, Kanagawa (JP)**
• **Katoh, Masaaki**
**Yokohama-shi, Kanagawa (JP)**

(74) Representative: **Pellegri, Alberto et al**
**c/o Società Italiana Brevetti S.p.A.**
**Via Puccini, 7**
**21100 Varese (IT)**

(56) References cited:
**EP-A- 0 051 440        EP-A- 0 068 522**
**EP-A- 0 319 489        EP-A- 0 357 077**

## Description

### FIELD OF THE INVENTION

The present invention relates to an apparatus and process for electrolytic ozone generation for safely and efficiently producing ozone at high purity with low electric power.

### BACKGROUND OF THE INVENTION

Ozone is widely used in various fields, such as water treatment, foods, medical hygiene, semiconductor production, etc., as a strong oxidizing agent. Ozone is usually produced by a discharging method or an electrolytic method but recently an electrolytic method capable of producing ozone in high concentration has been mainly used.

The electrolytic ozone generating method is based upon an anodic reaction according to the formula (1) indicated below, which is accompanied by an oxygen generating anodic reaction according to the formula (2) below, occurring as a side reaction.

$$3H_2O \rightarrow O_3 + 6H^+ + 6e^- \qquad (1)$$

$$2H_2O \rightarrow O_2 + 4H^+ + 4e^- \qquad (2)$$

The cathodic reaction is usually a hydrogen generating reaction according to the formula (3) below but, by supplying an oxygen-containing gas, the oxygen reduction reaction of formula (4) can also occur.

$$2H^+ + 2e^- \rightarrow H_2 \qquad (3)$$

$$O_2 + 4H^+ + 4e^- \rightarrow 2H_2O \qquad (4)$$

The article: "In situ Production of Ozone in Water Using a Membrane Electrolyzer", by S. Stucki, G. Theis, R. Kötz, H. Devantay and H.J. Christen, Journal of the Electrochemical Society, Vol. 132, No. 2, 1985 (pages 367-371), discloses a process for generating hydrogen at the cathode side and ozone and oxygen at the anode side by carrying out an electrolysis using an ion-exchange membrane as the electrolyte. Also, U.S. Patent 4,541,989 discloses a process for producing ozone without generation of hydrogen from a cathode using a tetrafluoroborate as the electrolyte, an oxygen reduction cathode as the cathode, and glassy carbon as the anode. EP A 0 068 522 discloses electrolytic production of ozone by a process wherein an oxygen saturated mixture of water and oxygen is led along both sides of a solid electrolyte, suppressing the hydrogen evolution by the depolarizing effect of the oxygen which is entrained in the water stream. Furthermore, JP-B-2-44908 (the term "JP-B" as used herein means an "examined published Japanese patent application") discloses a process for generating ozone by combining an ion-exchange membrane as the electrolyte and an oxygen reduction electrode.

However, in the process described in Stucki's paper described above, the hydrogen generated at the cathode is unnecessary and in addition means for treating hydrogen becomes necessary. Hydrogen has the ability of permeating through a substantially gas impervious membrane. In addition, there is a further disadvantage in that some of the hydrogen may intermix with an anodic gas containing oxygen and ozone through accidental perforations of the membrane and the system may become hazardous if the explosion limit is reached. Not only a possible intermixing of hydrogen is dangerous but also, when the produced ozone is used for washing semiconductors, a disadvantage occurs if the concentration of hydrogen in the oxygen is over several hundreds ppm. This would be over the upper concentration limit of hydrogen, with the result that the ozone thus generated could not be used for washing semiconductors.

Furthermore, the theoretical decomposition voltage for generating ozone through the concurrent anodic reactions according to formulas (1) and (2) described above is 1.5 V, which is higher than the decomposition voltage of 1.2 V when conducting conventional water electrolysis through the anodic and cathodic reactions according to formulas (2) and (3) described above. The cell voltage, under practical electrolytic conditions, for example, 100 A/dm$^2$, may be as high as about 3.3 V, and hence the amount of electric power consumed becomes very high.

Also, in the process described in U.S. patent 4,541,989 described above, to obtain ozone with good efficiency, it becomes necessary to maintain the electrolytic cells at a low temperature by cooling the electrolytic cells. However, although the working characteristics of the gas electrode used for oxygen reduction are excellent at high temperature, the working characteristics thereof become quite low at the relatively low temperatures dictated by the need to enhance anodic efficiency.

As a consequence, there is the disadvantage that the process can be operated from a practical standpoint at a low electric current density only.

Furthermore, the process described in said JP-B-2-44908 can be safely used to produce ozone at a high concentration but there is the disadvantage that the electric current density must be kept low for the same reasons and hence ozone cannot be produced with a good efficiency.

For generating ozone with a good efficiency, it would be desirable to conduct the electrolysis at a relatively low temperature, not higher than 60°C, while operating at a current density of at least 50 A/dm$^2$ or greater but hitherto, a gas electrode which satisfactorily functions under these conditions has not yet been found.

### SUMMARY OF THE INVENTION

An object of the present invention is to overcome the above-described problems in the conventional techniques and to provide an electrolytic ozone generating apparatus and process capable of operating at a high electric current density and capable of being used to produce ozone efficiently at high purity and at a high concentration with a low electric power substantially without generating hydrogen at the cathode.

The electrolytic ozone generating apparatus according to the present invention comprises (a) a laminated structure comprising

(i) an anode composed of an electrically conductive porous material carrying an ozone generating catalyst,
(ii) a perfluorocarbonsulfonic acid ion-exchange membrane functioning as a solid electrolyte, and
(iii) a cathode composed of a gas electrode containing an oxygen reduction catalyst, and
means for supplying an oxygen-containing gas to the cathode, and
wherein said gas electrode has hydrophilic portions and hydrophobic portions constituting a gas and liquid permeable porous layer and said catalyst is unevenly distributed within the gas electrode and is concentrated on the ion-exchange membrane side of said layer. Electrolysis is carried out while supplying an oxygen-containing gas to a back side of said cathode.

The electrolytic ozone generating process according to the present invention comprises

electrolyzing water by passing an electric current through an electrolysis apparatus comprising a laminated structure of

(i) an anode composed of an electrically conductive porous material carrying an ozone generating catalyst,
(ii) a perfluorocarbonsulfonic acid ion-exchange membrane functioning as a solid electrolyte, and
(iii) a cathode composed of a gas electrode containing an oxygen reduction catalyst, wherein said gas electrode has a hydrophilic property and a hydrophobic property and said catalyst is unevenly distributed therein and concentrated at the ion-exchange membrane side;
while supplying water to the anode and an oxygen-containing gas to a back side of said cathode of the electrolysis apparatus.

BRIEF DESCRIPTION OF THE DRAWINGS

**Figure 1** is a schematic cross sectional view of the electrolytic ozone generating apparatus of the invention.
**Figure 2** is an enlarged fragmentary view of the porous gas electrode constituting the cathode, adhered to the solid electrolyte membrane.

DETAILED DESCRIPTION OF THE INVENTION

The present invention is described in detail below.

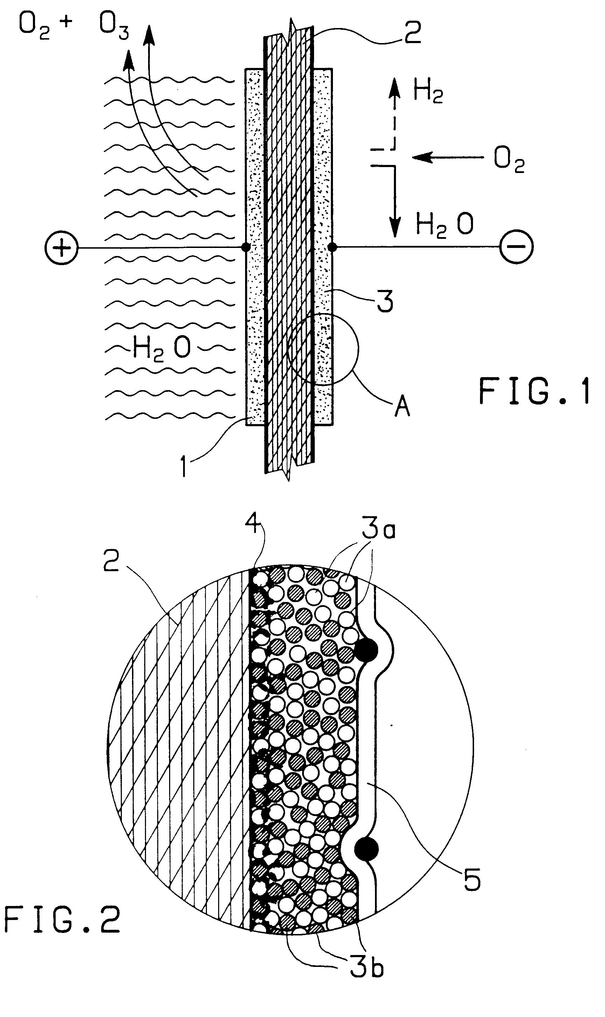

By referring to the Fig. 1, the electrolytic ozone generating apparatus of the invention comprises a laminated structure which is composed of an anode 1 of an electrically conducting porous material, carrying an ozone generating catalyst, laminated on one face of a perfluorocarbonsulfonic acid ion-exchange membrane 2, functioning as a solid electrolyte. The anode 1 may be bonded or unbonded to the membrane 2. A cathode 3, which is essentially composed of a gas electrode containing an oxygen reduction catalyst, is laminated on the opposite face of the membrane 2. Electrical connections of the anode and of the cathode to the respective poles of a DC supply, schematically shown in Fig. 1 by the relative symbols, may be realized by using metallic grids or alike pressed over the back side of the anode 1 and of the cathode 3, sandwiching the laminated structure (1-2-3) therebetween, or by any equivalent structure capable of collecting or distributing electric current from or to the laminated electrode.

According to an essential aspect of the apparatus of the invention, the gas electrode forming the cathode 3 has a peculiar structure, as depicted in the fragmentary enlarged part A of Fig. 1, shown in Fig. 2. Essentially, the cathode 3 comprises a porous layer that is formed by hydrophobic portions or particles 3a and by hydrophilic portions of particles 3b, intermixed with each other; the interstices or pores that extend across the thicknesses of the porous layer assume preferentially either a hydrophobic or a hydrophilic character, depending upon the prevailing of one or the other types of particles which define the pore. Altogether, the porous layer is capable of being permeated by both gas and liquid. Electric current may be drawn from the conductive cathode layer 3 through a metal screen 5 abutting on the back-side of the layer.

The oxygen reduction catalyst 4, which may be constituted by a catalytic material supported on carrier particles and/or by particles of a catalytic material, is not evenly distributed throughout the porous layer 3 but is concentrated mainly at or near the interface between the porous layer and the membrane 2. In practice, supported or unsupported particles of catalyst 4 are primarily disposed in the portion of the porous cathode layer 3 which is directly abutting against the ion exchange membrane 2.

When water, fed into an anode compartment of the electrolytic ozone generating apparatus of the present invention having the laminated structure described above, is electrolyzed while feeding an oxygen-containing gas into a cathode compartment of the apparatus, the anodic reaction and the cathodic reaction are the reactions shown by the formula (1) and formula (4), respectively, and ozone can be produced without or substantially without generating hydrogen at the cathode, which could possibly cause an explosion and which would require an additional post-treatment of the ozone gas mixture. Also, the theoretical decomposition voltage becomes 0.3 V, whereby ozone can be produced at a relatively high electric current density of about 100 A/dm$^2$, which has never been achieved in a conventional gas electrode, and at a relatively low cell voltage of about 2.3 V.

Suitable examples of anode catalysts for ozone generation which can be used in the apparatus of the present invention comprise conventional anode catalysts for ozone electrolysis, such as lead dioxide, tin dioxide, platinum, and glassy carbon. Lead dioxide is preferably used since this catalyst exhibits a high efficiency at high current density. The anode catalyst may be supported on an electrically conductive porous material such as sintered titanium fibers or titanium powders to form a porous anode. The anode catalyst can be powdered, mixed with the fine particles of polytetrafluoroethylene, and hot-pressed or in particular, in the case of lead dioxide, the anode catalyst can be applied onto a porous electroconductive structure by electrodeposition.

The ion-exchange membrane used as a solid electrolyte in the electrolytic cell of the present invention, may be perfluorocarbonsulfonic acid ion-exchange membrane such as Nafion (trade name, made by E.I. du Pont de Nemours & Co., Inc.). An ion-exchange membrane having a thickness of about 200 μm is generally used. However, provided that the ion-exchange membrane has sufficient mechanical strength, an ion-exchange membrane having a thinner thickness can be used to reduce electrical resistance. If the ion-exchange capacity of the ion-exchange membrane is from 0.7 to 1.2 milli-equivalent per gram thereof, the ion-exchange membrane will sufficiently function as a solid electrolyte and will have sufficient mechanical strength.

When a gas electrode having hydrophilic portions 3b and hydrophobic portions 3a is used as described above as the cathode, water molecules carried along as a hydration water cloud by protons migrating from the anode side toward the cathode through the ion-exchange membrane may be quickly removed and the transported water drained out of the porous cathode layer without flooding completely the catalytic portions (4) of the cathode. In other words, if the hydrophilic portions (3b) and the hydrophobic portions (3a) were not intermixed together throughout the full-thickness of the porous cathode structure to define pores having a hydrophilic character and pores having a hydrophobic character, the oxygen-containing gas supplied to the cathode could impede water permeation from the cathode side of the membrane 2 through the cathode layer 3, whereby water could not smoothly and quickly drain out of the catalytic portion of the cathode. By forming a hydrophilic portion and a hydrophobic portion, the water molecules are easily removed from the most hydrophilic catalytic portion where the catalyst particles 4, which are intrinsically highly hydrophilic, are concentrated to the inside of the cathode.

For forming suitably intermixed hydrophilic portions and hydrophobic portions in the cathode, the cathode may be formed of a hydrophilic material and a hydrophobic material. For example, a carbon powder or a fine metal powder of Ni or Ag can be advantageously used as the hydrophilic material (3b) and, for example, a polytetrafluoroethylene powder or a fluorinated graphite can be advantageously used as the hydrophobic material (3a).

When the cathode catalyst is concentrately present in portion of the cathode that is in contact with the ion-exchange membrane, electrolysis using the ion-exchange membrane as the electrolyte can be smoothly carried out. Accordingly, in producing the cathode used in the present invention, it is preferred that fine particles of a hydrophobic polymer such as polytetrafluoroethylene be mixed with hydrophilic electrically conductive fine particles, such as carbon. After press-adhering the mixture by heating the mixture onto an electrically conductive porous material such as sintered product of stainless steel fibers or stainless steel powders, carbon fibers, etc., with a high hydrophilic property, a catalyst such as platinum is applied to the porous material at the side only thereof that will be adjacent the ion-exchange membrane. Examples of methods of applying the catalyst to one surface of the support are method of press-adhering a previously formed layer of platinum-carrying carbon particles, etc., to one surface of the porous material, a method of coating a solution containing platinum as a salt thereof on one surface of the porous material and baking to reduce the platinum, etc..

The cathode, in the form of a gas electrode having the structure described above, may be closely adhered to the ion-exchange membrane together with the anode as described above followed by press-adhering with heating or an ion-exchange resin solution may be coated on one surface of a pre-formed cathode, followed by drying and thereafter the anode may be press-adhered thereto by heating to provide a laminated anode/membrane/cathode structure. By incorporating the said laminated structure into an electrolytic cell, the electrolytic ozone generating apparatus of the present invention is produced.

When electrolysis is carried out in the electrolytic ozone generating apparatus of the present invention at a temperature of 60°C or less and an electric current density of at least 50 A/dm$^2$, and preferably at a temperature of from 20 to 40°C and a current density of from 70 to 130 A/dm$^2$ while supplying pure water such as ion-exchanged water to the anode side and pure oxygen or an oxygen-containing gas such as high-concentration oxygen obtained by an oxygen concentrating apparatus to the cathode side, an ozone gas of a high concentration and a high purity can be produced with a good efficiency at the anode side without substantially generating any hydrogen at the cathode side.

Examples of producing ozone using the electrolytic ozone generating apparatus of the present invention are described below but the invention is not to be construed as being limited by these examples. Unless otherwise indicated herein, all parts, percents, ratios and the like are by weight.

Example 1

By repeating the operation of coating an aqueous hydrochloric acid solution containing chloroplatinic acid on one surface of a sintered titanium fiber material having a thickness of 2 mm (made by Tokyo Seiko K.K.) with a brush and baking at 450°C, a platinum underlayer of 20 g/m$^2$ was applied. After adding a small amount of nitric acid to 800 g/liter of an aqueous lead nitrate solution as an electrolyte, the electrolyte was heated to 70°C, the sintered material described above was immersed in the electrolyte, and after previously carrying out a pre-electrolysis at a current density of 10 A/dm$^2$, electrolysis was carried out at a current density of 4 A/dm$^2$ to electrodeposit a $\beta$-lead dioxide layer onto the surface of the sintered material as an anode.

As an ion-exchange membrane, Nafion 117 (trade name, made by E.I. du Pont de Nemours & Co., Ltd.) subjected to a stream treatment was used.

A mixture of a graphite powder (made by Tokai Carbon Co., Ltd.) and an aqueous suspension of Teflon (trade name, made by E.I. du Pont de Nemours & Co., Ltd.) was press-adhered to both surfaces of a carbon woven fabric by heating to 200°C. To one surface thereof was further press-adhered a mixture of an aqueous suspension of platinum-carrying carbon and Teflon and a solution of Nafion by heating to 120°C to form a cathode.

The effective area of these electrodes and the ion-exchange membrane was 56 cm$^2$.

The anode, the ion-exchange membrane, and the cathode were closely adhered to each other and incorporated in an electrolytic cell of titanium. Ion-exchanged water was supplied to the anode side using a metering pump and oxygen was supplied to the cathode side from the upper portion of the electrolytic cell. When electrolysis was carried out at a current density of 100 A/dm$^2$ while maintaining liquid temperature at 40°C, the cell voltage was 2.30 V, the hydrogen concentration in the cathode side was 0.01%, the ozone concentration was 15.5%, and the hydrogen concentration in the anode gas was less than 20 ppm. The required electric power per gram of ozone was calculated to be 49.7 W·hr.

Example 2

When the same electrolytic cell as used in Example 1 was used, oxygen having a concentration of 80% produced using a PSA-type oxygen concentration apparatus was supplied to the cathode side of the electrolytic cell, and ozone was produced under the same electrolytic conditions as in Example 1, the cell voltage was 2.40 V, the hydrogen concentration in the cathode gas was 0.06%, the ozone concentration was 16%, and the hydrogen concentration in the anode gas was 200 ppm.

The required electric power per gram of ozone was calculated to be 50.2 W·hr.

Comparative Example 1

When the same electrolytic cell as described in Example 1 was used and the hydrogen generation and the ozone generation were carried out without supplying oxygen to the cathode side of the electrolytic cell, the cell voltage was 3.30 V, the ozone concentration was 15.4%, and the hydrogen concentration in the anode gas was 0.3%. The required electric power per gram of ozone was calculated to be 71.8 W·hr.

From the results obtained in the examples and the comparative example above, it can be seen that even when the electrolytic ozone generating apparatus of the present invention is operated at a high electric current density of 100 A/dm$^2$, an ozone gas having a relatively high concentration of from 15 to 16% can be obtained at a considerably lower electrolytic voltage of from 2.3 to 2.4 V than that of from 2.90 to 3.30 V in the comparative example, that is, at a low amount of electric power consumed.

As described above, by using the electrolytic ozone generating apparatus of the present invention, the electrolytic voltage can be kept low, whereby the production of ozone can be carried out while restraining the amount of electric power consumed to about 30%.

Furthermore, a relatively high electric current density of at least, for example, 50 A/dm$^2$, can be maintained at a relatively low temperature of not higher than, e.g., 60°C, which is suitable for the production of ozone, and ozone can be produced with good efficiency.

Also, by using the cathode described above, the generation of hydrogen at the cathode can be substantially prevented, whereby the danger of explosion due to mixing of hydrogen and oxygen can be avoided thus enabling the safe operation of the ozone production while making unnecessary any treatment for hydrogen. Furthermore, by using this cathode, the concentration of hydrogen intermixed with the ozone gas produced can be substantially nil and a high-purity ozone can be produced.

**Claims**

1. An electrolytic ozone generating apparatus comprising a laminated structure which comprises

(i) an anode composed of an electrically conductive porous material carrying a catalyst for ozone generation,
(ii) a perfluorocarbonsulfonic acid ion-exchange membrane functioning as a solid electrolyte, and
(iii) a cathode composed of a gas electrode containing a catalyst for the reduction of oxygen, and

means for supplying water to the anode;

means for supplying an oxygen-containing gas to the cathode, and

wherein said gas electrode has hydrophilic portions and hydrophobic portions constituting a gas and liquid permeable porous layer and said catalyst is unevenly distributed therein, being concentrated at or near the interface between the porous cathode layer and the ion-exchange membrane .

2. The electrolytic ozone generating apparatus according to Claim 1, wherein the ozone generating catalyst carried on the electrically conductive porous material as the anode is lead dioxide, tin dioxide, platinum or glassy carbon.

3. The electrolytic ozone generating apparatus according to Claim 1, wherein the electrically conductive porous material is sintered titanium fibers.

4. The electrolytic ozone generating apparatus according to Claim 1, wherein the ion-exchange membrane has an ion-exchange capacity of 0.7 to 1.2 milli-equivalents per gram.

5. The electrolytic ozone generating apparatus according to Claim 1, wherein the hydrophobic property of the gas electrode is provided by polytetrafluoroethylene and the hydrophilic property of the gas electrode is provided by carbon.

6. A process for generating ozone comprising

electrolyzing water by passing an electric current through an electrolysis apparatus comprising a laminated structure comprising

(i) an anode composed of an electrically conductive porous material carrying an ozone generating catalyst,
(ii) a perfluorocarbonsulfonic acid ion-exchange membrane functioning as a solid electrolyte, and
(iii) a cathode composed of a gas electrode containing an oxygen reduction catalyst, wherein said gas electrode has both hydrophilic and hydrophobic properties and contains said catalyst unevenly distributed therein and concentrated at the interface with said ion-exchange membrane;

while supplying water to the anode and an oxygen-containing gas to a backside of said cathode of the laminated structure.

7. The process according to Claim 6, wherein the electrolysis is conducted at a temperature of 60°C or less and at an electric current density of at least 50 A/dm$^2$.

8. The process according to Claim 7, wherein the temperature is 20 to 40°C and the electric current density is 70 to 130 A/dm$^2$.

**Patentansprüche**

1. Eine Vorrichtung zur elektrolytischen Herstellung von Ozon, die eine Schichtstruktur umfasst, die umfasst

(i) eine Anode, die aus einem elektrisch leitenden, porösen Material gebildet ist, das einen Katalysator zur Ozonerzeugung trägt,
(ii) eine Ionenaustauschmembrane aus Perfluorkohlenstoff-Sulfonsäure (perfluorocarbonsulfonic acid), die als ein Festelektrolyt arbeitet, und
(iii) eine Kathode, die aus einer Gaselektrode gebildet ist, die einen Katalysator zur Reduktion von Sauerstoff enthält, und

eine Einrichtung zum Zuführen von Wasser zu der Anode; eine Einrichtung zum Zuführen eines Sauerstoff enthaltenden Gases zu der Kathode, und worin die genannte Gaselektrode wasseranziehende Bereiche und wasserabstoßende Bereiche aufweist, die eine gas- und flüssigkeitsdurchlässige, poröse Schicht bilden, und der genannte Katalysator ungleichmäßig darin verteilt ist, wobei er an oder nahe der Grenzschicht zwischen der porösen Kathodenschicht und der Ionenaustauschmembrane konzentriert ist.

2. Die Vorrichtung zur elektrolytischen Herstellung von Ozon, gemäß Anspruch 1, worin der Ozon erzeugende Katalysator auf dem elektrischeleitenden, porösen Material getragen wird, wenn die Anode Bleidioxid, Zinndioxid, Platin oder glasartiger Kohlenstoff ist.

3. Die Vorrichtung zur elektrolytischen Herstellung von Ozon, gemäß Anspruch 1, worin das elektrisch leitende, poröse Material gesinterte Titanfasern sind.

4. Die Vorrichtung zur elektrolytischen Herstellung von Ozon, gemäß Anspruch 1, worin die Ionenaustauschmembrane ein Ionenaustauschvermögen von 0,7 bis 1,2 Milliäquivalente pro Gramm hat.

5. Die Vorrichtung zur elektrolytischen Herstellung von Ozon, gemäß Anspruch 1, worin die wasserabstoßende Eigenschaft der Gaselektrode durch Polytetrafluorethylen geschaffen ist und die wasseranziehende Eigenschaft der Gaselektrode durch Kohlenstoff geschaffen ist.

6. Ein Verfahren zur Herstellung von Ozon, umfassend

Elektrolysieren von Wasser, indem ein elektrischer Strom durch eine Elektrolysevorrichtung hindurchgeht, die eine Schichtstruktur umfaßt, die umfasst

(i) eine Anode, die aus einem elektrischleitenden, porösen Material gebildet ist, das einen Katalysator zur Ozonerzeugung trägt,
(ii) eine Ionenaustauschmembran aus Perfluorkohlenstoff-Sulfonsäure, die als ein Festelektrolyt arbeitet, und
(iii) eine Kathode, die aus einer Gaselektrode gebildet ist, die einen Sauerstoffreduktionskatalysator enthält, worin die genannte Gaselektrode wasseranziehende und wasserabstoßende Eigenschaften hat und den genannten Katalysator ungleichmäßig darin verteilt und an der Grenzfläche mit der genannten Ionenaustauschmembrane konzentriert enthält;
während Wasser der Anode und ein Sauerstoff enthaltendes Gas einer Rückseite der genannten Kathode der Schichtstruktur zugeführt wird.

7. Das Verfahren gemäß Anspruch 6, worin die Elektrolyse bei einer Temperatur von 60 °C oder weniger und bei einer elektrischen Stromdichte von wenigsten 50 A/dm2 durchgeführt wird.

8. Das Verfahren gemäß Anspruch 7, worin die Temperatur 20 bis 40 °C ist und die elektrische Stromdichte 70 bis 130 A/dm2 ist.

**Revendications**

1. Un appareil électrolytique générateur d'ozone comprenant une structure laminée qui comprend

(i) une anode composée d'un matériel poreux électriquement conducteur qui porte un catalyseur pour la génération d'ozone,
(ii) une membrane d'acide perfluorocarbosulfonique èchangeuse d'ions qui fonctionne comme électrolyte solide, et
(iii) une cathode composée d'une électrode à gaz contenant un catalyseur pour la réduction de l'oxygène, et
des moyens pour alimenter de l'eau à l'anode;
des moyens pour alimenter un gaz contenant de l'oxygéne à la cathode, et
dans laquelle ladite électrode à gaz a des parties hydrophiliques et des parties hydrophobiques qui constituent une couche poreuse perméable aux gaz et aux liquides et ledit catalyseur y est distribué de façon non homogène, étant concentré à ou prés de l'interface entre la couche cathodique poreuse et la membrane échangeuse d'ions.

2. L' appareil électrolytique générateur d'ozone selon la revendication 1, dans lequel le catalyseur générateur d'ozone supporté sur le matériel poreux électriquement conducteur en tant qu'anode est bioxyde de plomb, bioxyde d'étain, platine ou carbone vitreux.

3. L' appareil électrolytique générateur d'ozone selon la revendication 1, dans lequel le matériel poreux électriquement conducteur est formé de fibres de titane frittées.

4. L' appareil électrolytique générateur d'ozone selon la revendication 1, dans lequel la membrane échangeuse d'ions a une capacité d'échange d'ions de 0,7 à 1,2 milli-équivalents par gramme.

5. L' appareil électrolytique générateur d'ozone selon la revendication 1, dans lequel la propriété hydrophobique de l'électrode a gaz est donnée par le polytetrafluoroéthylène et la propriété hydrophilique est donnée par le carbone.

6. Un procédé pour la génération d'ozone comprenant

l'électrolyse de l'eau à l'aide du passage d'un courant électrique à travers un appareil d'électrolyse comprenant une structure laminée qui comprend

(i) une anode composée d'un matériel poreux électriquement conducteur qui porte un catalyseur pour la génération d'ozone,
(ii) une membrane d'acide perfluorocarbosulfonique èchangeuse d'ions qui fonctionne comme électrolyte solide, et
(iii) une cathode composée d'une électrode à gaz contenant un catalyseur pour la réduction de l'oxygène, dans laquelle ladite électrode à gaz a des propriétés soit hydrophiliques soit hydrophobiques et contient ledit catalyseur y distribué de façon non homogène et concentré à l'interface avec ladite membrane échangeuse d'ions;

alors que de l'eau est alimentée à l'anode et un gaz contenant de l'oxygène est alimenté au derrière de ladite cathode de la structure laminée.

7. Le procédé selon la revendication 6, dans lequel l'électrolyse est réalisée à une temperature de 60°C ou moindre et à une densité de courant électrique d'au moins 50 A/dm$^2$.

8. Le procédé selon la revendication 6, dans lequel la temperature est de 20 à 40°C et la densité de courant électrique est de 70 à 130 A/dm$^2$.

$O_2 + O_3$

$H_2$

$O_2$

$H_2O$

$H_2O$

$\oplus$

$\ominus$

2

3

A

1

FIG.1

2

4

3a

5

3b

FIG.2